# EUROPÄISCHE PATENTANMELDUNG

(11) **EP 1 162 586 A1**
(43) Veröffentlichungstag der Anmeldung: **12.12.2001**
(21) Anmeldenummer: 01112584.6
(22) Anmeldetag: 23.05.2001
(51) Int. Cl.: G08G 1/0968, G01C 21/34

(54) **Verfahren zum Auswerten von Verkehrsinformationen**

(30) Priorität: 09.06.2000 DE 10028661
(71) Anmelder: NOKIA MOBILE PHONES LTD., 02150 Espoo (FI)
(72) Erfinder: Baur, Reinhold, 89233 Neu-Ulm (DE); Koppinen, Anne, 33100 Tampere (FI); Kirjavainen, Anne, 02100 Espoo (FI); Roque-Cerna, Maximiliano, 89312 Günzburg (DE); Lutz, Abe, 89155 Erbach (DE); Prestele, Peter, 89269 Vöhringen (DE)
(74) Vertreter: TER MEER STEINMEISTER & PARTNER GbR

(57) **Zusammenfassung**

Die Erfindung betrifft ein Verfahren zum Auswerten von Verkehrsinformationen, die von einem Verkehrsinformationsdienst übermittelt werden, bei dem Daten über die Verkehrslage auf einer in der gegenwärtigen Fahrtrichtung zu befahrenden Strecke erhalten werden, und aus den Daten über die Verkehrslage eine voraussichtliche Fahrzeitverzögerung auf der zu befahrenden Strecke berechnet wird. Um nutzloses Warten bei Verkehrsstörungen zu vermeiden, ist vorgesehen, daß die Größe der berechneten voraussichtlichen Fahrzeitverzögerung zusammen mit einer Empfehlung, die Fahrt zu unterbrechen, angezeigt wird, wenn die voraussichtliche Fahrzeitverzögerung in der gegenwärtigen Fahrtrichtung größer als ein bestimmter Wert ist.

## Beschreibung

### Technisches Gebiet

Die Erfindung betrifft ein Verfahren zur Zielführung zu einem Ziel unter Nutzung von Navigationsanordnungen.

### Stand der Technik

Verfahren zum Auswerten und Nutzen von Verkehrsinformatione, insbesondere in Navigationsanordnungen oder -systemen zur Zielführung sind allgemein im Stand der Technik bekannt, so daß auf eine detaillierte Darstellung der verschiedenen Schritte verzichtet werden kann. Beispielsweise ist es bekannt, aufgrund von Stauinformationen allgemeine oder individuelle Umleitungsempfehlungen zu geben. Unabhängig von der Funktionsweise von als Navigationsanordnungen bezeichneten Zielführungshilfen im Einzelfall, sind Navigationsanordnungen in der Lage, ausgehend von einer momentanen Position dem Nutzer die Route zu einem gewünschten Ziel anzugeben.

Dabei wird die gegenwärtige Position beispielsweise mit einem GPS-Sensor (Global Positioning System) ermittelt. Diese Daten werden dann mit den Daten des gewünschten Ziels in Verbindung gebracht und die Wegstrecke zum Ziel ermittelt. Ist dieser Vorgang abgeschlossen, werden die Ergebnisse der Streckenführung dem Nutzer akustisch und/oder visuell mitgeteilt, wobei das "Abarbeiten" der Wegstrecke zum gewünschten Ziel durch entsprechende Sensoren überwacht wird. Letzteres stellt beispielsweise sicher, daß der Fahrer beim Verlassen der ermittelten Route einen Hinweis erhält oder aber die Navigationsanordnung ausgehend von der neuen Situation eine neue, den geänderten Bedingungen angepaßte Wegführung zum Ziel ermittelt.

Optional kann bei den Navigationsanordnungen vorgesehen sein, daß diese nicht nur eine Wegstrecke zum Ziel ermitteln, sondern eine Mehrzahl von Möglichkeiten zur Zielerreichung bereitstellen und aus diesen Möglichkeiten beispielsweise die kürzeste oder schnellste Verbindung an den Nutzer ausgeben, je nach dem welche dieser Möglichkeiten der Nutzer wählt oder voreinstellt.

Ferner ist es bekannt, daß der Nutzer bestimmte und für ihn interessante Wegpunkte in einer Speicheranordnung ablegen kann. Ist beispielsweise der Nutzer an einer bestimmten Art von Museen interessiert, dann kann er dieses Interesse auf einem der Speicherplätze der Speicheranordnung hinterlegen. Dies führt dann dazu, daß dem Nutzer auf seiner Fahrt das baldige Erreichen eines für ihn interessanten Museums angezeigt wird. Bestätigt der Nutzer etwa, weil er etwas Zeit hat, das angezeigte Museum zu besuchen, so wird er unter Nutzung des Navigationssystems zu dem Museum geleitet. Um die Anzeige von interessanten Wegpunkten in Grenzen zu halten, kann beispielsweise vorgesehen sein, daß - um im Beispiel zu bleiben - nur solche offeriert werden, die innerhalb eines vom Nutzer einstellbaren Radius liegen. Auch kann aus gleichen Gründen die Anzeige von solchen Museen unterdrückt werden, die der Nutzer bereits besucht hat.

Ferner ist auch die Kombination von Navigationsanordnungen mit Diensten bekannt, welche in Abhängigkeit von der oder den ermittelten Routen Daten über den Straßenzustand und/oder die Verkehrslage auf diesen Routen bereitstellen. Diese vom jeweiligen Dienst bereitgestellten Daten dienen beispielsweise dazu, bei Stauungen auf der bevorzugten Strecke zum Ziel Alternativrouten zu ermitteln, auf denen der Nutzer sein Ziel zügig und möglichst staufrei erreichen kann.

Oftmals ist es aber so, daß in Spitzenzeiten nicht nur die Hauptroute, sondern auch die Alternativrouten blockiert sind. Auch kann es vorkommen, daß keine Alternativstrecken zu Verfügung stehen. Dies führt unweigerlich dazu, daß die Fahrzeugführer eine mehr oder minder lange Zeit nutzlos im Stau verbringt.

Daher liegt der Erfindung die Aufgabe zugrunde ein weiteres Verfahren zum Auswerten von Verkehrsinformationen anzugeben, das es ermöglicht, nutzloses Warten bei Verkehrsstörungen zu vermeiden.

### Darstellung der Erfindung

Diese Aufgabe wird durch das Verfahren nach Anspruch 1 gelöst. Vorteilhafte Aus- und Weiterbildungen der Erfindung sind den Unteransprüchen entnehmbar.

Erfindungsgemäß ist also bei einem eingangsgenannten Verfahren zum Auswerten von Verkehrsinformationen, die von einem Verkehrsinformationsdienst übermittelt werden, vorgesehen, daß die Größe der berechneten voraussichtlichen Fahrzeitverzögerung zusammen mit einer Empfehlung, die Fahrt zu unterbrechen, angezeigt wird, wenn die voraussichtliche Fahrzeitverzögerung in der gegenwärtigen Fahrtrichtung größer als ein bestimmter Wert ist.

Eine vorteilhafte Weiterbildung des erfindungsgemäßen Verfahrens zeichnet sich dadurch, daß vor dem Anzeigen der Empfehlung zur Fahrtunterbrechung eine Alternativroute ermittelt und die Fahrzeitverzögerung bei Benutzung der Alternativroute berechnet wird, und die Anzeige der Empfehlung zur Fahrtunterbrechung ausgegeben wird, wenn die kürzeste der ermittelten voraussichtlichen Fahrzeitverzögerungen größer als der bestimmter Wert ist.

Auf diese Weise wird sichergestellt, daß ein Nutzer des erfindungsgemäßen Verfahrens hinreichende Informationen über die Verkehrslage auf der Wegstrecke vor ihm erhält, um Stauzeiten sinnvoll zu überbrücken.

Dabei ist es zweckmäßig, wenn der bestimmte Wert von einem Nutzer vorgebbar ist. Auf diese Weise wird es einem Nutzer möglich, im Voraus zu entscheiden, ab welcher Verzögerungszeitdauer er auf die Möglichkeit einer Unterbrechung seiner Fahrt aufmerksam gemacht werden möchte. Will beispielsweise ein LKW-Fahrer Stauzeiten zur Einhaltung seiner vorgeschriebenen Ruhezeiten nutzen, so ist eine Mindestzeitdauer der Pause erforderlich, um die Vorschriften einzuhalten.

Eine andere Ausgestaltung der Erfindung zeichnet sich dadurch aus, daß eine Routenführung zu einem bestimmten interessanten Wegpunkt angeboten wird, wenn der Zeitaufwand für den Besuch des interessanten Wegpunkts als bestimmter Wert kleiner als die ermittelte voraussichtliche Fahrzeitverzögerung ist, wobei der Zeitaufwand für den Besuch des interessanten Wegpunkts aus der Länge des Hin- und Rückwegs sowie aus einer vorgebbaren oder vorgegebenen Aufenthaltsdauer am interessanten Wegpunkt berechnet wird.

Somit läß sich sicherstellen, daß durch den Besuch des interessanten Wegpunkts kein Zeitverlust eintritt, da der Zeitaufwand für den Hin- und Rückweg kleiner als die staubedingte Verzögerung ist.

Genauere Zeitangaben werden erzielt, wenn bei der Berechnung des Zeitaufwands für den Besuch des interessanten Wegpunkts die auf dem Weg zum interessanten Wegpunkt zubenutzenden Straßentypen, die darauf zugelassenen Höchstgeschwindigkeiten und gegebenfalls das bisherige Fahrverhalten eines Nutzers berücksichtigt werden.

Vorteilhafterweise kann vorgesehen sein, daß die interessanten Wegpunkte vom Nutzer und/oder Kategorien interessanter Wegpunkte vorgebbar sind.

### Kurzbeschreibung der Figuren

Die Erfindung soll im folgenden anhand der Zeichnung näher erläutert werden. Es zeigen:
- Fig. 1: ein Beispiel für eine Fahrt von Bochum nach Stuttgart; und
- Fig. 2: ein weiteres Ausführungsbeispiel gemäß Fig. 1

### Wege zum Ausführen der Erfindung

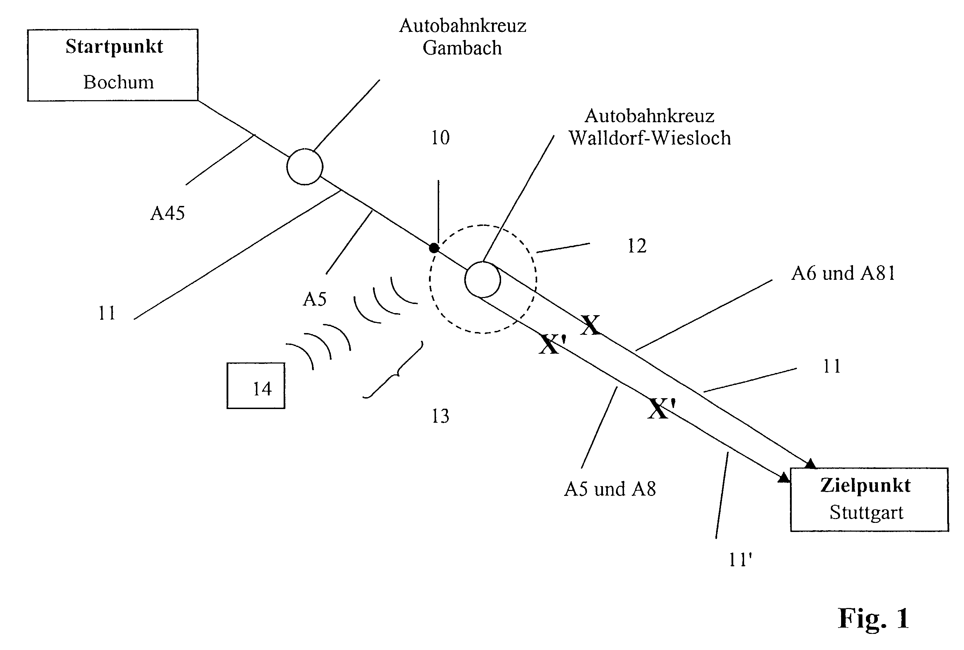

In Fig. 1 wird eine Fahrt von Bochum nach Stuttgart beschrieben. Da sich der Fahrer bei dieser Fahrt vom Navigationssystem (nicht gezeigt) seines Fahrzeugs 10 führen lassen will, hat er vor Fahrtantritt in Bochum die genauen Zieldaten nach Stadt und Straße eingegeben. Als Navigationssystem kann dabei ein im Fahrzeug installiertes System vorgesehen sein. Es ist aber auch denkbar ein Navigationssystem zur Routenführung zu nutzen, dem die Streckeninformation von einem Dienstanbieter über eine Luftschnittstelle oder -strecke, die z. B. von einem Funkkommunikationssystem oder einer Mobilfunkverbindung gebildet wird, übermittelt werden. Entsprechend dieser Zieldaten wird der Fahrer dann über die Autobahn A45 bis zum Autobahnkreuz Gambach geleitet und er erhält dort den Hinweis, auf die Autobahn A5 in Richtung Frankfurt abzubiegen.

Auf seiner Route 11 nach Stuttgart erreicht das Fahrzeug 10 auf der Autobahn A5 irgendwann den Bereich des Autobahnkreuzes Walldorf-Wiesloch. Dieser Bereich ist in Fig. 1 mit 12 gekennzeichnet. An diesem Autobahnkreuz würde, da das Navigationssystem im vorliegenden Beispiel auf die kürzeste Strecke programmiert ist, der Fahrer unter normalen Umständen den Hinweis erhalten, daß der am Autobahnkreuz Walldorf-Wiesloch auf die Autobahn A6 in Richtung Heilbronn abzubiegen hat.

Angedeutet durch die Luftstrecke 13 steht das Fahrzeug 10 mit einem Dienstanbieter 14 in Datenaustausch, so daß dem Navigationssystem in dem Fahrzeug 10 laufend oder periodisch Straßenverkehrsmeldungen für die zum Ziel führenden Strecke oder Strecken zur Verfügung gestellt werden. Da sich entsprechend der obigen Annahme der Fahrer für seine Fahrt von Bochum Stuttgart vom Navigationssystem führen lassen will, erhält er von dem Dienstanbieter die für die ermittelte Route 11 relevanten Verkehrsmeldungen.

Herrscht beispielsweise auf der Autobahn A6 wegen starken Reiseverkehrs ein Stau (angedeutet durch ein X) von ca. 15 km Länge, wird vom Dienstanbieter 14 die für die Bewältigung des Staus erforderliche Zeit berechnet und dem Navigationssystem mitgeteilt. Überschreitet diese Zeit einen festgelegten Rahmen, wird ausgehend vom derzeitigen Standort des Fahrzeugs 10 eine Alternativroute 11' ermittelt. Vorliegend wurde angenommen, daß als Wert für das Einleiten der Ermittlung einer Alternativroute 11' eine Verzögerung von mehr als 10 Minuten eingestellt wurde, so daß durch eine ermittelte Verzögerung auf der Route 11 von einer Stunde und 45 Minuten sofort mit dem Ermitteln einer Alternativroute 11' begonnen wird. Diese Alternativroute 11' führt am Autobahnkreuz Walldorf-Wiesloch über die Autobahnen A5 und A8 zum Ziel Stuttgart. Auch für diese Alternativroute 11' werden vom Dienstanbieter 14 Verkehrsinformationen abgerufen. Ergeben die für die Alternativroute 11' empfangenen Verkehrsinformationen gleichfalls Staus (angedeutet durch X') mit einer Gesamtlänge von 16 km bzw. mit einer Verzögerungszeit von einer Stunde und 30 Minuten, wird dem Fahrer die Größe der berechneten voraussichtlichen Fahrzeitverzögerung zusammen mit einer Empfehlung, die Fahrt zu unterbrechen, angezeigt. Zusätzlich kann eine alternative Nutzung der Stauzeiten vorgeschlagen werden.

Somit ist es für einen Geschäftsreisenden möglich, während der Fahrt zu einem Ziel wichtigere Tätigkeiten zu verrichten, als längere Zeit im Stau zu verbringen. Es wäre beispielsweise denkbar, daß der Fahrer eine Mindestzeit vorgibt, die es ihm ermöglicht, unterwegs auf einem Parkplatz seine Emails im Fahrzeug zu lesen oder ein wichtiges Telefonat zu führen. Sobald entsprechend der Erfindung erkannt wird, daß es sinnvoller ist einen Parkplatz anzufahren anstatt im Stau zu stehen, kann das Navigationssystem die Anfahrt des nächsten Parkplatzes vorschlagen.

Weiterhin könnte mit dem erfindungsgemäßen Verfahren dafür gesorgt werden, daß LKW-Fahrer die vorgeschriebenen Ruhezeiten besser einhalten können, indem gemäß der Erfindung eine Ruhepause, beispielsweise auf einem Parkplatz, vorgeschlagen wird. Auch hier kann der Fahrer beispielsweise eine Mindestzeit vorgeben, die sinnvollerweise notwendig ist. Sollte die Verkehrslage sich vor dem Ablauf dieser Ruhezeit gebessert haben, wird das System gemäß der Erfindung mit einer Nachricht zum Weiterfahren so lange Warten, bis die Mindestpausenzeit abgelaufen ist.

Die für eine Routenführung zu einem interessanten Wegpunkt relevanten Schritte werden nun im folgenden erörtert. Ist der Fahrer beispielsweise besonders am Golfspiel interessiert und/oder hat er eine besondere Vorliebe für regionale Weinsorten, kann er dies dem Navigationssystem mitteilen. Der Nutzer des erfindungsgemäßen Verfahrens kann also eine oder mehrere Kategorien von ihn interessierenden interessanten Wegpunkten auswählen, so daß er bei staubedingten Verzögerungen die dadurch entstehenden Wartezeiten seinen privaten und/oder beruflichen Interessen gemäß nutzen kann.

Sind die entsprechenden Angaben gemacht und gelangt der Fahrer in eine in Fig. 1 näher erläuterte Verkehrssituation, bei welcher die Route 11 und die Alternativroute oder Alternativrouten 11' zu staubedingten Verzögerungen führen, wird dem Fahrer entsprechend seinem vorher eingestellten Neigungen ein Alternativprogramm zum Stau angeboten, indem er zu interessanten und seinen vorher eingestellten Neigungen entsprechenden Wegpunkten geführt wird. Voraussetzung für die Führung zu interessanten Wegpunkten ist allerdings, daß die staubedingten Verzögerungszeiten größer oder gleich dem Zeitaufwand für das Erreichen des interessanten Wegpunktes sind. Ausgehend von den beiden Verzögerungszeiten von einer Stunde und 45 Minuten bzw. einer Stunde und 30 Minuten, wird die jeweils kürzeste Verzögerungszeit zum Maß der Dinge gemacht. Dies bedeutet, daß im Umkreis von einer Stunde und 30 Minuten nach einem den Fahrer interessierenden Wegpunkt gesucht wird.

Befindet sich beispielsweise in 5 km Entfernung zum Autobahnkreuz Walldorf-Wiesloch ein Golfplatz, wird dem Fahrer dieser Golfplatz angezeigt und die Führung dorthin angeboten, wenn der Zeitaufwand für das Erreichen des Golfplatzes gleich/oder kleiner dem Zeitraum für die staubedingte Verzögerung von einer Stunde und 30 Minuten ist. Um zu ermitteln, welcher Zeitaufwand für die Überbrückung der 5 km vom Autobahnkreuz Walldorf-Wiesloch zum Golfplatz erforderlich ist, werden zum einen die zu benutzenden Straßentypen und das Fahrverhalten des Nutzers auf den jeweiligen Straßentypen in der Vergangenheit zugrunde gelegt. Gelangt man zu dem Golfplatz in der Nähe zum Autobahnkreuz Walldorf-Wiesloch über eine Schnellstraße und hat der Nutzer in der Vergangenheit Schnellstraßen mit durchschnittlich 80 km/ h befahren, so wird aus diesen Angaben eine Fahrzeit von rund 7 Minuten ermittelt.

Um genauere Daten über die Fahrtzeit zum Golfplatz zu erhalten, können auch Angaben des Dienstanbieters 14 genutzt werden, wenn dieser beispielsweise die zulässigen Höchstgeschwindigkeiten für die zu benutzenden Straßen bereithält.

Da dieser Wert von 7 Minuten unterhalb des Wertes für die staubedingt Verzögerung von einer Stunde und 30 Minuten liegt, wird dem Nutzer der Golfplatz als Alternative zum Stau angeboten und eine Führung dorthin durchgeführt, wenn der Nutzer dies bestätigt.

Wie leicht einzusehen ist, sollte die staubedingte Verzögerung nicht vollständig zur Suche nach einem den Nutzer interessierenden Wegpunkt eingesetzt werden, da neben dem Zeitablauf für die Fahrt zum interessanten Wegpunkt auch der Rückweg und eine angemessene Zeit des Verweilens gegeben sein muß. Ein guter Kompromiß ist etwa dann gegeben, wenn 15 bis 25 % der staubedingten Verzögerung als Richtwerte für die Suche nach einem interessanten Wegpunkt eingesetzt wird.

Will man die Verwendung der Kompromißwerte ausschließen, kann auch vorgesehen sein, daß dem Nutzer nur solche Wegpunkte angegeben werden, bei denen der Zeitbedarf für den Hin- und Rückweg geringer ist als die Verzögerungszeit durch den Stau. Dadurch wird sichergestellt, daß es zu keinen Verzögerungen durch die Fahrt zu dem interessanten Wegpunkt kommt. Neben der Hin- und Rückfahrt müßte dann aber auch noch die Verweildauer berücksichtigt werden. Dies kann beispielsweise durch den Nutzer erfolgen, indem dieser für bestimmte Gruppen von interessanten Wegpunkten eine Verweildauer vorgibt. Auch kann die Anordnung so ausgebildet sein, daß, wenn sich der Nutzer zu interessanten Wegpunkten führen läßt, daraus eine durchschnittliche Verweildauer ermittelt wird, die dann zur Dauer für die Hin- und Rückfahrt addiert wird.

Auch wenn bisher davon ausgegangen wurde, daß die Führung nur zu vorher vom Nutzer eingegebenen und ihn interessierenden Wegpunkten erfolgt, ist es möglich, daß auch dann, wenn der Nutzer keine Angaben zu ihn interessierenden Wegpunkten gemacht hat, zur angenehmen Überbrückung von Stauzeiten ein oder mehrere Vorschläge zu allgemein interessierenden Wegpunkten gemacht werden. Dies kann beispielsweise so aussehen, daß dem Nutzer der Besuch eines Museums oder eines Einkaufszentrums in der Nähe vorgeschlagen wird.

Wählt der Nutzer aus dem allgemeinen Angebot von Vorschlägen beispielsweise oft Cafés aus, kann, wenn das Navigationssystem lernfähig ausgebildet ist, diese Häufigkeit zum Anlaß genommen werden, daß später bei staubedingten Verzögerungen in erster Näherung nur Cafés zur angenehmen Überbrückung von Stauzeiten vorgeschlagen werden.

Ferner ist es denkbar, daß Nutzer bei der Routenauswahl ihn persönlich interessierende Wegpunkte, wie z. B. die Adressen von neben der gewählten Route wohnenden Freunden, selbst eingibt.

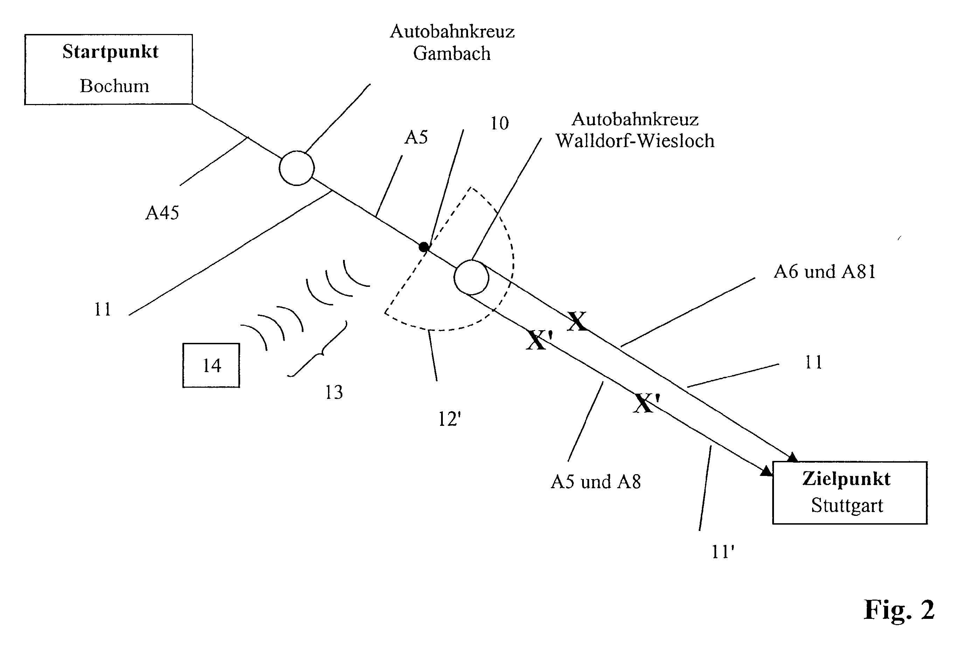

In Fig. 2 ist ebenfalls ein Beispiel für eine Fahrt von Bochum nach Stuttgart dargestellt. Im Unterschied zum Beispiel gemäß Fig. 1 wird hier keine Zielführung vom Fahrer verwendet. Um auch bei einem solchen Verhalten des Fahrers die Vorteile des erfindungsgemäßen Verfahren zu nutzen, ist es notwendig, daß zu bestimmten Zeitpunkten die geographische Position des Fahrzeugs abgestrahlt wird. Diese Informationen können dann vom Dienstanbieter verwendet werden, um die vermutliche Fahrrichtung zu ermitteln. Fährt beispielsweise der Fahrer in Bochum los, wird schon durch die Verwendung der Autobahn A45 klar das der Fahrer sich mehr oder minder mit seinem Fahrzeug 10 nach Süden bewegt. Diese Informationen können zum Anlaß genommen werden, daß das Navigationssystem nur noch mit Verkehrsinformationen für einen Bereich versorgt wird, der sich beispielsweise in einem Halbkreis 12' von 50 km vor dem Fahrzeug 10 befindet.

Erhält das Navigationssystem beispielsweise vor dem Autobahnkreuz Walldorf-Wiesloch die Meldung, daß sowohl auf der Autobahn A5 als auch auf der Autobahn A6 mit staubedingten Verzögerungen zu rechnen ist, werden dem Fahrer die Verzögerungszeiten auf den betreffenden Autobahnen zusammen mit der Frage angezeigt, ob nach einer, ein Kolonnenfahren im Stau ausschließenden und einen interessanten Wegpunkt angebenden Alternative, gesucht werden soll. Löst der Fahrer die Suche nach einem interessanten Wegpunkt aus, wird ihm dann wie schon im Zusammenhang mit dem in Fig. 1 erläuterten Ausführungsbeispiel, ein interessanter Wegpunkt innerhalb des zeitlichen Fensters, welches sich aus der staubedingten Verzögerung ergibt, angeboten und die Zielführung zu dem vom Fahrer ausgewählten interessanten Wegpunkt aktiviert. So daß der Fahrer zur angenehmen Überbrückung der Stauzeit zum ausgewählten interessanten Wegpunkt geführt wird.

Da die jeweiligen, von den Dienstanbietern 14 abgegebenen Verkehrsinformationen nicht statisch, sondern ständigen Veränderungen unterworfen sind, kann vorgesehen sein, daß beispielsweise bei Verlängerung von einmal ausgegebenen staubedingten Verzögerungszeiten diese Lage dem Nutzer mitgeteilt wird, damit dieser seine Verweildauer am interessanten Wegpunkt verlängern kann. Letzteres kann dergestalt erfolgen, daß, wenn der Nutzer sich zu einem interessanten Wegpunkt hat führen lassen, dies registriert wird und bei Verlängerung der staubedingten Verzögerung eine Nachricht beispielsweise als SMS auf sein Mobiltelefon erhält, daß er noch weitere 30 Minuten am derzeitigen Ort ohne zeitlichen Nachteil verweilen kann. Diese Schrittfolge kann auch verwendet werden, wenn sich beispielsweise der Stau wesentlich schneller auflöst als ursprünglich angenommen. Zeichnet sich beispielsweise ab, daß sich der Stau auf der A6 schon nach einer Stunde aufgelöst haben wird, kann auch hier der Nutzer eine Nachricht auf sein Mobiltelefon erhalten, die ihn von dieser Wendung unterrichtet.

Das erfindungsgemäße Verfahren kann also als Teil eines Navigationssystems vorgesehen sein oder unabhängig davon arbeiten. Das gesamte Verfahren kann dabei bei einem Diensteanbieter ablaufen, der beispielsweise über eine Mobilfunkverbindung mit der Navigationseinrichtung im Fahrzeug kommuniziert. Die einzelnen Verfahrensschritte können aber auch in einer entsprechenden Einrichtung im Fahrzeug ausgeführt werden, wobei es auch denkbar ist, über das Autoradio empfangene Verkehrsnachrichten zu nutzen. Darüber hinaus ist auch möglich die einzelnen Schritte des erfindungsgemäßen Verfahrens zwischen einer entsprechenden Endeinrichtung im Fahrzeug und der Zentrale des Diensteanbieters aufzuteilen.

## Patentansprüche

1. Verfahren zum Auswerten von Verkehrsinformationen, die von einem Verkehrsinformationsdienst übermittelt werden, bei dem:
- Daten über die Verkehrslage auf einer in der gegenwärtigen Fahrtrichtung zu befahrenden Strecke erhalten werden, und
- aus den Daten über die Verkehrslage eine voraussichtliche Fahrzeitverzögerung auf der zu befahrenden Strecke berechnet wird,
**dadurch gekennzeichnet, daß**
- die Größe der berechneten voraussichtlichen Fahrzeitverzögerung zusammen mit einer Empfehlung, die Fahrt zu unterbrechen, angezeigt wird, wenn die voraussichtliche Fahrzeitverzögerung in der gegenwärtigen Fahrtrichtung größer als ein bestimmter Wert ist.

2. Verfahren nach Anspruch 1, **dadurch gekennzeichnet, daß**
- vor dem Anzeigen der Empfehlung zur Fahrtunterbrechung eine Alternativroute ermittelt und die Fahrzeitverzögerung bei Benutzung der Alternativroute berechnet wird, und
- die Anzeige der Empfehlung zur Fahrtunterbrechung ausgegeben wird, wenn die kürzeste der ermittelten voraussichtlichen Fahrzeitverzögerungen größer als der bestimmter Wert ist.

3. Verfahren nach Anspruch 1 oder 2, **dadurch gekennzeichnet, daß** der bestimmte Wert von einem Nutzer vorgebbar ist.

4. Verfahren nach Anspruch 1, 2 oder 3, **dadurch gekennzeichnet, daß** eine Routenführung zu einem bestimmten interessanten Wegpunkt angeboten wird, wenn der Zeitaufwand für den Besuch des interessanten Wegpunkts als bestimmter Wert kleiner als die ermittelte voraussichtliche Fahrzeitverzögerung ist.

5. Verfahren nach Anspruch 4, **dadurch gekennzeichnet, daß** der Zeitaufwand für den Besuch des interessanten Wegpunkts aus der Länge des Hinund Rückwegs sowie aus einer vorgebbaren oder vorgegebenen Aufenthaltsdauer am interessanten Wegpunkt berechnet wird.

6. Verfahren nach Anspruch 4 oder 5, **dadurch gekennzeichnet, daß** bei der Berechnung des Zeitaufwands für den Besuch des interessanten Wegpunkts die auf dem Weg zum interessanten Wegpunkt zubenutzenden Straßentypen berücksichtigt werden.

7. Verfahren nach Anspruch 4, 5 oder 6, **dadurch gekennzeichnet, daß** bei der Berechnung des Zeitaufwands für den Besuch des interessanten Wegpunkts das bisherige Fahrverhalten des Nutzers berücksichtigt wird.

8. Verfahren nach einem der Ansprüche 4 bis 7, **dadurch gekennzeichnet, daß** die interessanten Wegpunkte vom Nutzer vorgebbar sind.

9. Verfahren nach einem der Ansprüche 4 bis 7, **dadurch gekennzeichnet, daß** Kategorien interessanter Wegpunkte vom Nutzer vorgebbar sind.
